# EUROPÄISCHE PATENTSCHRIFT

(11) **EP 2 423 060 B1**
(45) Veröffentlichungstag und Bekanntmachung des Hinweises auf die Patenterteilung: **01.06.2016**
(21) Anmeldenummer: 11006752.7
(22) Anmeldetag: 18.08.2011
(51) Int. Cl.: B60T 7/22, B60W 30/08, B60R 21/013

(54) **Verfahren zum Steuern eines Bremsassistenzsystems und Bremsassistenzsystem für ein Fahrzeug**
Braking assistance system for a vehicle and method for controlling a braking assistance system for a vehicle
Procédé de commande d'un système d'assistance au freinage et système d'assistance au freinage pour un véhicule

(30) Priorität: 24.08.2010 DE 102010035197
(43) Veröffentlichungstag der Anmeldung: 29.02.2012
(73) Patentinhaber: Volkswagen Aktiengesellschaft, 38440 Wolfsburg (DE)
(72) Erfinder: Menzel, Werner, 31226 Peine (DE); Balbach, Mariusz, 38116 Braunschweig (DE)

(56) Entgegenhaltungen:
- DE-A1-102004 058 663
- DE-A1-102008 042 963

## Beschreibung

Die vorliegende Erfindung betrifft Verfahren zum Steuern eines Bremsassistenzsystems eines Fahrzeugs, bei dem Sensorsignale zumindest eines ersten Sensors in zumindest ein Steuersignal umgesetzt und das Steuersignal über eine erste Verbindung an ein Bremsregel-Steuergerät übertragen wird, wobei das Steuersignal anzeigt, ob ein Unfall aufgetreten ist. Die vorliegende Erfindung betrifft ferner ein dazugehöriges Bremsassistenzsystem für ein Fahrzeug.

Moderne Bremsanlagen bauen mittels Bremsassistenzsystemen zumindest in Teilbetriebszuständen Bremskraft an den Rädern auf, die in einzelnen Betriebszuständen größer als die vom Fahrer vorgegebene Bremskraft ist und sogar unabhängig von dieser sein kann. Als Beispiel sei eine Bremsanlage mit Antriebsschlupf- oder Fahrdynamikregler genannt, bei welcher bei Vorliegen bestimmter Bedingungen unabhängig von der Bremspedalbetätigung des Fahrers ein automatischer Bremsvorgang eingeleitet und Bremskraft an den Radbremsen aufgebaut wird.

Mit derartigen Bremsassistenzsystemen wird eine zufriedenstellende Steuerung des Bremsvorgangs, dessen Grenzbereiche und/oder eine zufriedenstellende Stabilisierung des Fahrzeugs erreicht. Im Stillstand des Fahrzeugs wird das Fahrzeug in der Regel durch die Pedalbetätigung des Fahrers gehalten. Die zum Stillstand notwendige Bremskraft ist im allgemeinen gegenüber der während des Bremsvorgangs aufgebrachten Bremskraft geringer, da nicht mehr kinetische Energie reduziert, sondern nur z.B. eine Hangabtriebskraft kompensiert werden muss. Daher kann bei einem passiven Auffahrunfall, wenn ein weiteres Fahrzeug auf das Fahrzeug auffährt, das Fahrzeug trotz einer solchen Bremsbetätigung verschoben werden oder seitlich ausbrechen. Dies ist vor allem dann kritisch, wenn das Fahrzeug in einen Gefahrenbereich hineingeschoben wird, beispielsweise beim Halten vor einer Ampel in die Kreuzung oder bei sogenannten Massenkarambolagen auf Autobahnen.

Ferner kann es zu einer sogenannten Mehrfachkollision kommen, bei der zwei oder mehrere zeitlich voneinander getrennte Kollisionen des Fahrzeugs mit anderen Gegenständen auftreten. Mehrfachkollisionen könnten teilweise vermieden oder deren Auswirkungen, d.h. die Unfallschwere, abgemildert werden, wenn das Fahrzeug unmittelbar nach der ersten Kollision angemessen gebremst würde. Eine besonders starke Abmilderung der Unfallfolgen bzw. eine besonders große Chance, eine zweite Kollision zu vermeiden, ist in solchen Fällen gegeben, in denen die erste Kollision nur eine "leichte" Kollision ist, z.B. eine Kollision eines Fahrzeugs mit einer Leitplanke unter einem flachen Winkel. Nach einer solchen Kollision ist der Fahrer häufig nicht in der Lage, das Fahrzeug noch zu beherrschen, so dass das Fahrzeug unkontrolliert gegen ein anderes Fahrzeug oder andere in der Umgebung des Fahrzeugs befindliche Gegenstände stößt. Wird das Fahrzeug hingegen nach der ersten Kollision automatisch über ein geeignetes Bremssystem abgebremst, so steigt die Wahrscheinlichkeit, dass der Fahrer das Fahrzeug wieder beherrschen kann und/oder dass das Fahrzeug zum Stillstand kommt, bevor es mit einem anderen Gegenstand kollidiert.

Die DE 197 53 971 B4 beschreibt ein Verfahren zum Steuern einer Bremsanlage, bei dem aus der Betätigung des Bremspedals, den Raddrehzahlen des Fahrzeugs und/oder Signalen eines Beschleunigungssensors eines Rückhaltesteuerungssystems, insbesondere einer Airbag-Steuerung, eine Unfallsituation abgeleitet wird. Bei Erkennen einer solchen Unfallsituation wird eine größere als vom Fahrer vorgegebene Bremskraft aufgebaut.

Die DE 10 2008 042 963 A1 beschreibt ein Verfahren zur Einstellung eines Bremssystems eines Fahrzeugs. Das dabei verwendete Bremssystem umfasst Bremseinrichtungen, die über Stellsignale eines Regel- bzw. Steuergerätes eingestellt werden. Diesem Regel- bzw. Steuergerät werden Sensorsignale zugeführt, die von einer Sensorik stammen, mit der Fahrzeugzustandsgrößen ermittelbar sind. Des Weiteren ist ein Airbag-Steuergerät vorgesehen, welches bei einer Kollision des Fahrzeugs ein Signal an das Regel- bzw. Steuergerät überträgt. Zusätzlich oder alternativ werden auch aus der Sensorik dem Regel- bzw. Steuergerät Informationen bereitgestellt, aus denen eine unmittelbar bevorstehende oder bereits eingetretene Kollision abgeleitet werden kann. Im Regel- bzw. Steuergerät werden unter Berücksichtigung der eingegangenen Signale Stellsignale zur Beaufschlagung der Bremseinrichtungen generiert.

Es ist die Aufgabe der vorliegenden Erfindung, ein Verfahren zum Steuern eines Bremsassistenzsystems und ein Bremsassistenzsystem für ein Fahrzeug bereitzustellen, die bei einem Unfall zuverlässig das Auftreten von Mehrfachkollisionen verhindern.

Diese Aufgabe wird erfindungsgemäß durch ein Verfahren zum Steuern eines Bremsassistenzsystems mit den Merkmalen des Anspruchs 1 sowie durch ein Bremsassistenzsystem mit den Merkmalen des Anspruchs 6 gelöst. Vorteilhafte Aus- und Weiterbildungen ergeben sich aus den abhängigen Ansprüchen.

Bei dem erfindungsgemäßen Verfahren zum Steuern eines Bremsassistenzsystems wird das oder ein weiteres Steuersignal, das anzeigt, ob ein Unfall aufgetreten ist, über eine zweite Verbindung, die physikalisch unabhängig von der ersten Verbindung ist, an das Bremsregel-Steuergerät übertragen und das Bremsregel-Steuergerät erzeugt ein Bremsregelsignal in Abhängigkeit von den über die beiden Verbindungen empfangenen Steuersignalen. Mittels des Bremsregelsignals werden die Bremsen des Fahrzeugs zum Ausführen einer kontrollierten Bremsung, z.B. einer Vollbremsung oder einer Teillastbremsung, betätigt.

Die erste Verbindung ist typischerweise der Datenbus im Fahrzeug, an den das Bremsregel-Steuergerät angeschlossen ist. Die zweite Verbindung kann insbesondere eine drahtgebundene elektrische oder optische Signal-Direktverbindung sein, die vom Ort der Erzeugung des Steuersignals zum Bremsregel-Steuergerät führt. Sie kann aber auch in anderer Weise, z.B. wenigstens teilweise drahtlos realisiert sein. Das Steuersignal über die zweite Verbindung kann als Absicherung für das Steuersignal über die erste Verbindung benutzt werden. In diesem Falle müssen beide Steuersignale beim Bremsregel-Steuergerät vorliegen, damit eine Bremsung ausgeführt wird. Das Steuersignal über die zweite Verbindung kann auch für eine redundante Signalübertragung genutzt werden, so dass, falls durch den Unfall die erste Verbindung unterbrochen wird, überhaupt noch ein Steuersignal von dem Bremsregel-Steuergerät empfangen werden kann. Die Direktverbindung hat noch den weiteren Vorteil, dass das Steuersignal hierüber gegebenenfalls schneller zum Bremsregel-Steuergerät als über einen für verschiedenste Signale genutzten Datenbus übertragen werden kann.

Erfindungsgemäß werden Sensorsignale eines zweiten Sensors, der unabhängig von dem ersten Sensor ist, in ein Schaltsignal umgesetzt, wobei das Schaltsignal anzeigt, ob ein Unfall aufgetreten ist. Das Steuersignal wird über die zweite Verbindung dann an das Bremsregel-Steuergerät übertragen, wenn das Schaltsignal anzeigt, dass ein Unfall aufgetreten ist. Hierdurch wird bewirkt, dass das vom ersten Sensor ausgegebene Steuersignal zum Anzeigen eines Unfalls als Fehlauslösung interpretiert und nicht an das Bremsregel-Steuergerät übermittelt wird, wenn das Steuersignal von einem zweiten Sensor keinen Unfall anzeigt. Dies erhöht insbesondere die Zuverlässigkeit des Bremsassistenzsystems, weil nun aus zwei voneinander unabhängigen Sensorsignalen zum Anzeigen, ob ein Unfall aufgetreten ist, je ein Steuersignal über zwei physikalisch voneinander unabhängige Verbindungen an das Bremsregel-Steuergerät übertragen wird. Es kann somit zuverlässig eine Betätigung der Bremsen ausgelöst werden, wodurch die Gefahr einer weiteren Kollision vermindert werden kann.

In einer Ausgestaltung des erfindungsgemäßen Verfahrens ist vorgesehen, dass ein vom Auftreten eines Unfalls unabhängiges Betriebssignal erzeugt wird und dass dieses Betriebssignal an das Bremsregel-Steuergerät übertragen wird, wenn das Schaltsignal anzeigt, dass kein Unfall aufgetreten ist. Das Betriebssignal kann dabei den Zweck erfüllen, die einwandfreie Funktionsfähigkeit der zweiten Verbindung und/oder gegebenenfalls damit assoziierter Hardware zu prüfen.

Das Steuersignal kann sich insbesondere von dem Betriebssignal unterscheiden. In dem Bremsregel-Steuergerät kann dann mittels eines Unterscheidungsmerkmals des über die zweite Verbindung empfangenen Signals ein Betriebszustand oder Fehlerzustand ermittelt werden. Wird beispielsweise seitens des Bremsregel-Steuergeräts über die zweite Verbindung ein Signal empfangen, das weder der Signalform des Steuersignals noch des Betriebssignals entspricht, so kann daraus ein fehlerhaftes Verhalten in der zweiten Verbindung oder damit assoziierter Hardware gefolgert werden. Auch kann das vom ersten Sensor erzeugte Steuersignal über die zweite Verbindung je nachdem, ob der erste Sensor einen Unfall erkannt hat, unterschiedlich sein. Sind die Signalformen der Steuersignale unterschiedlich zu der Signalform des Betriebssignals, so kann ferner im Bremsregel-Steuergerät festgestellt werden, welches Signal über die zweite Verbindung empfangen wurde. Insbesondere kann damit erkannt werden, wenn der zweite Sensor einen Unfall erkannt hat, der erste aber nicht. Dies ist insbesondere hilfreich für eine spätere Fehlerdiagnose, die z.B. während der Wartung des Fahrzeugs durchgeführt wird.

In einer Ausgestaltung des erfindungsgemäßen Verfahrens sind das Steuersignal und/oder das Betriebssignal pulsmodulierte Signale. Pulsmodulierte Signale lassen sich einfach in analogen Schaltungen realisieren und werden bereits für andere Zwecke im Zusammenhang mit der Motorsteuerung oder in Zusammenhang mit Sensoren zur Unfallerkennung eingesetzt, z.B. als Triggersignale für einen automatischen Notruf. Auf diese Weise kann auf bestehende Hardware im Fahrzeug zurückgegriffen werden. Zudem kann das Steuersignal des ersten Sensors, wenn beispielsweise kein Unfall erkannt wird, eine bestimmte Pulsabfolge aufweisen, die im Falle eines Unfalls einfach invertiert wird.

Vorteilhafterweise wird das Betriebssignal vom Steuersignal getriggert. Auf diese Weise würde bereits frühzeitig durch ein ausbleibendes oder fehlerhaftes Betriebssignal in dem Bremsregel-Steuergerät ein fehlerhafter Betrieb des ersten Sensors ermittelbar sein, wenn der zweite Sensor noch keinen Unfall erkannt hat. Beispielsweise bewirkt ein fehlerhafter Betrieb des ersten Sensors, dass kein Steuersignal mehr erzeugt wird bzw. das erzeugte Steuersignal derart fehlerhaft ist, dass es nicht mehr das Betriebssignal auslösen kann.

Für den vom Bremsregel-Steuergerät über die zweite Verbindung ermittelten Betriebs- oder Fehlerzustand kann ein entsprechendes Signal an den Fahrer des Fahrzeugs erzeugt werden. Beispielsweise kann im Falle eines Fehlerzustandes ein Fehlersignal über den Datenbus im Fahrzeug an eine Ausgabevorrichtung übermittelt werden und z.B. in Form einer visuellen oder akustischen Nachricht den Fahrer auf diesen Fehler aufmerksam machen.

Das erfindungsgemäße Bremsassistenzsystem für ein Fahrzeug umfasst eine Steuervorrichtung zum Empfangen und Auswerten von Sensorsignalen zumindest eines ersten Sensors, wobei von der Steuervorrichtung zumindest ein Steuersignal ausgebbar ist, welches anzeigt, ob ein Unfall aufgetreten ist. Ferner umfasst das Bremsassistenzsystem ein Bremsregel-Steuergerät, das über eine erste Verbindung mit der Steuervorrichtung gekoppelt ist und mit welchem ein von der Steuervorrichtung ausgegebenes Steuersignal empfangbar ist. Das Bremsassistenzsystem umfasst des Weiteren eine zweite Verbindung, welche die Steuervorrichtung mit dem Bremsregel-Steuergerät koppelt, wobei die zweite Verbindung physikalisch unabhängig von der ersten Verbindung ist, und dass mit dem Bremsregel-Steuergerät das oder ein weiteres von der Steuervorrichtung ausgegebene(s) Steuersignal über die zweite Verbindung empfangbar ist und ein Bremsregelsignal für die Bremsen des Fahrzeugs in Abhängigkeit von den über die beiden Verbindungen empfangenen Steuersignalen erzeugbar ist. Das erfindungsgemäße Bremsassistenzsystem ist insbesondere zum Durchführen des erfindungsgemäßen Verfahrens geeignet. Es weist somit auch dieselben Vorteile wie das erfindungsgemäße Verfahren auf.

Erfindungsgemäß weist das erfindungsgemäße Bremsassistenzsystem in der zweiten Verbindung einen Umschalter auf, der einen ersten Signaleingang, einen Signalausgang und einen Schalteingang umfasst. Der Umschalter ist dabei so mit der Steuervorrichtung gekoppelt, dass dem ersten Signaleingang des Umschalters das über die zweite Verbindung von der Steuervorrichtung ausgegebene Steuersignal zuführbar ist. Die Steuervorrichtung ist zum Empfangen und Auswerten von Sensorsignalen eines zweiten Sensors, der unabhängig von dem ersten Sensor ist, ausgebildet, wobei von der Steuervorrichtung ein von den Sensorsignalen des zweiten Sensors abhängiges Schaltsignal an den Schalteingang des Umschalters ausgebbar ist, wobei das Schaltsignal anzeigt, ob ein Unfall aufgetreten ist. Der Umschalter ist ferner so ausgebildet, dass das Steuersignal vom ersten Signaleingang zum Signalausgang weitergeleitet wird, wenn das Schaltsignal anzeigt, dass ein Unfall aufgetreten ist. Das Schaltsignal kann dabei von derselben oder einer separaten Steuervorrichtung erzeugt werden.

Der Vorteil des Umschalters besteht darin, dass dieser die zwei unabhängigen Sensorsignale zum Erkennen eines Unfalls auf einfache Weise logisch verknüpft und ein dazugehöriges Steuersignal über eine zweite unabhängige Verbindung an das Bremsregel-Steuergerät sendet.

In einer Weiterbildung weist das erfindungsgemäße Bremsassistenzsystem einen Signalgenerator zum Erzeugen eines vom Auftreten eines Unfalls unabhängigen Betriebsignals auf. Der Signalgenerator ist mit einem zweiten Signaleingang des Umschalters gekoppelt und der Umschalter ist so ausgebildet, dass das Betriebssignal des Signalgenerators vom zweiten Signaleingang zum Signalausgang weitergeleitet wird, wenn das Schaltsignal anzeigt, dass kein Unfall aufgetreten ist. Der Signalgenerator kann dabei mit der Steuervorrichtung derart gekoppelt sein, dass das Betriebssignal von dem Steuersignal getriggert wird.

Die Steuervorrichtung in dem erfindungsgemäßen Bremsassistenzsystem ist insbesondere ein Airbag-Steuergerät, die Bremsregel-Steuervorrichtung ist insbesondere eine Steuerung für sogenannte ESP-Systeme (ESP = Electronic Slip Protection).

Sensoren zum Erfassen einer Unfallsituation sind gängigerweise in Airbag-Steuergeräten verbaut. Airbag-Steuerungen umfassen dabei typischerweise wenigstens zwei verschiedene Sensoren, die unabhängig voneinander eine Unfallsituation erfassen, wobei eine Bremsanforderung erst dann angefordert wird, wenn beide Sensoren ausgelöst wurden. Vom ersten Sensor, der insbesondere über die Lage und Richtung eines Aufpralls Auskunft gibt, sind typischerweise eine Vielzahl im Fahrzeug verbaut. Der zweite Sensor dient dagegen der Absicherung gegen eine ungewollte Auslösung des Airbags. Dabei ist die Schaltschwelle des zweiten Sensors, der deshalb auch als Sicherheits- oder "Safing"-Sensor bezeichnet wird, so eingestellt, dass dieser unter normalen Fahrtbedingungen nicht ausgelöst werden kann. Seine Schaltschwelle ist typischerweise aber niedriger eingestellt als die des ersten Sensors oder der ersten Sensoren.

Airbag-Sensoren arbeiten z.B. als Feder-Masse-System, wobei die Masse im Falle einer starken Beschleunigung, die z.B. durch die Kollision des Fahrzeugs mit einem anderen Fahrzeug oder einem Hindernis verursacht wurde, mechanisch derart ausgelenkt wird, dass dadurch ein Kontakt zum Auslösen eines Unfallsignals geschlossen wird.

Erfindungsgemäß ist des Weiteren ein Fahrzeug mit einem solchen Bremsassistenzsystem ausgestattet.

Die Erfindung wird nun anhand von Ausführungsbeispielen mit Bezug zu den Zeichnungen näher erläutert.
- Figur 1: zeigt schematisch den Aufbau eines Ausführungsbeispiels eines erfindungsgemäßen Bremsassistenzsystems,
- Figur 2: zeigt schematisch einen Ausschnitt aus dem Ausführungsbeispiel des erfindungsgemäßen Bremsassistenzsystems aus Figur 1 mit dem Umschalter zuführbaren Steuer- und Betriebssignalen gemäß einem Ausführungsbeispiel des erfindungsgemäßen Verfahrens,
- die Figuren 3a - 3d: zeigen Steuer- und Betriebssignale am Signalausgang des Umschalters nach Figur 2 in Abhängigkeit von verschiedenen Situationen und
- die Figur 4: zeigt eine alternative Ausführungsform zu dem in Figur 2 gezeigten Ausschnitt des Ausführungsbeispiels des erfindungsgemäßen Bremsassistenzsystems.

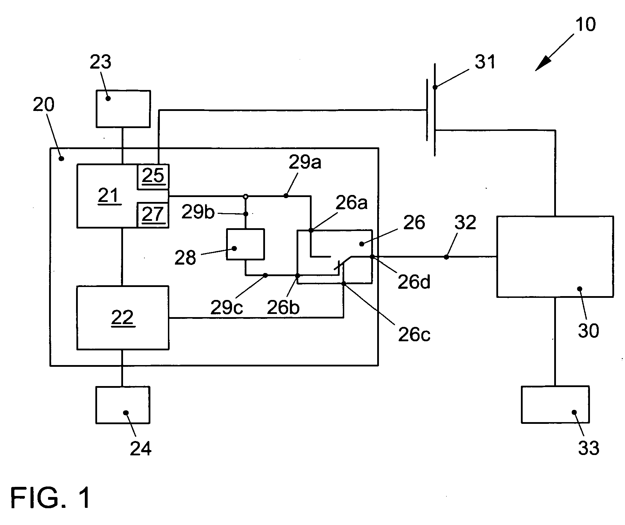

In der Figur 1 ist schematisch der Aufbau eines Ausführungsbeispiels eines erfindungsgemäßen Bremsassistenzsystems 10 dargestellt. Eine Airbag-Steuerung 20 umfasst einen Hauptcontroller 21 und einen Nebencontroller 22, die miteinander in Verbindung stehen und jeweils mit einem der Sensoren 23, 24 zum sensorischen Erfassen, ob ein Unfall aufgetreten ist, gekoppelt sind. Im Hauptcontroller 21 kann dazu eine Auswerteeinheit 25 realisiert sein, die die empfangenen Sensorsignale der Sensoren 23, 24 vergleicht oder auswertet und in Abhängigkeit davon ein Steuersignal zum Auslösen einer kontrollierten Vollbremsung erzeugen kann. Im Hauptcontroller 21 ist ferner ein erster Signalgenerator 27 integriert, der in Abhängigkeit von den über den Sensor 23 empfangenen Signale pulsweitenmodulierte Signale erzeugen kann. Die Airbag-Steuerung 20 ist typischerweise in der Mittelkonsole oder im Kardantunnel des Fahrzeugs verbaut und mit dem Datenbus 31 im Fahrzeug verbunden.

Der erste Sensor 23 ist mehrfach vorgesehen und an verschiedenen Orten im Fahrzeug verbaut, um über die Lage und Richtung eines Aufpralls Auskunft geben zu können. Die Gurtstraffer und Airbags der einzelnen Sitzpositionen können in Abhängigkeit davon, welcher der Sensoren 23 einen Unfall meldet und in welcher Schwere ein Aufprall registriert wird, gesteuert werden. Die Sensoren 23 und 24 unterscheiden sich in ihrer Bauart, insbesondere hinsichtlich ihrer Schaltschwelle. Dabei dient der zweite Sensor 24 der Absicherung gegen eine ungewollte Auslösung des Airbags. Seine Schaltschwelle ist so eingestellt, dass der Sensor 24 unter normalen Fahrtbedingungen nicht ausgelöst werden kann, also kein Signal ausgeben kann, das einen Unfall anzeigen würde. Die Schaltschwelle liegt beispielsweise bei einer Beschleunigung oberhalb von 2 g (g = 9,81 m/s²). Die Schaltschwelle des ersten Sensortyps liegt dabei höher, z.B. in einem Bereich von 4 g bis 5 g.

Es kann nun vorkommen, dass der erste Sensor 23 vor dem zweiten Sensor 24 einen Unfall erkennt, beispielsweise durch eine starke elektromagnetische Einkopplung, die fälschlicherweise ein Signal auslöst, das einen Unfall anzeigt. Dies wird, falls nicht auch der zweite Sensor 24 einen Unfall erkennt, nicht als Unfall gewertet, sondern als blinder Alarm identifiziert.

Die ESP-Steuerung 30 (ESP = Electronic Slip Protection) zum elektronischen Steuern der Bremsen ist typischerweise im Motorraum verbaut und mit dem Datenbus 31 im Fahrzeug verbunden. Über den Datenbus 31 im Fahrzeug ist sie mit der Airbag-Steuerung 20 gekoppelt, so dass sie ein von der Airbag-Steuerung 20 ausgegebenes Steuersignal empfangen kann. Ein solches Steuersignal dient beispielsweise dazu, eine kontrollierte Vollbremsung auszuführen. Die ESP-Steuerung 30 ist ferner mit den Bremsmitteln, insbesondere den Bremsen 33 im Fahrzeug gekoppelt und kann diese insbesondere in Abhängigkeit von Steuersignalen und in Abhängigkeit von den Signalen des Bremspedals oder der Bremskraftverstärker steuern oder regeln.

Die Airbag-Steuerung 20 ist des Weiteren über eine Direktverbindung 32, die physikalisch unabhängig von dem Datenbus 31 im Fahrzeug verlegt ist, mit der ESP-Steuerung 30 verbunden. Die Direktverbindung 32 kann beispielsweise als Kabel vom Motorraum zur Mittelkonsole bzw. dem Kardantunnel verlegt sein und über sie können Steuersignale, die insbesondere dem Ausführen einer kontrollierten Vollbremsung dienen, übermittelt werden. Diese können gegebenenfalls mit einem über den Datenbus 31 des Fahrzeugs empfangenen Steuersignal verglichen werden. Eine Vollbremsung wird dann durchgeführt, wenn z.B. eines der beiden Steuersignale oder beide Steuersignale anzeigen, dass ein Unfall aufgetreten ist.

In der Airbag-Steuerung 20 ist ein Umschalter 26 vorgesehen, der einen ersten Signaleingang 26a, optional einen zweiten Signaleingang 26b, einen Signalausgang 26d und einen Schalteingang 26c aufweist. Der Umschalter 26 ist in der Airbag-Steuerung 20 derart verdrahtet, dass dem ersten Signaleingang 26a des Umschalters 26 ein pulsweitenmoduliertes Steuersignal von dem ersten Signalgenerator 27 über die Verbindung 29a zugeführt werden kann.

In Abhängigkeit von den Sensorsignalen des zweiten Sensors 24 kann der Nebencontroller 22 an den Schalteingang 26c des Umschalters 26 ein Schaltsignal übertragen, welches anzeigt, ob der zweite Sensor 24 einen Unfall registriert hat. Der Umschalter 26 leitet das Steuersignal vom ersten Signaleingang 26a nur dann zum Signalausgang 26d weiter, wenn das Schaltsignal anzeigt, dass ein Unfall aufgetreten ist.

Der Umschalter 26 leitet also nur dann die auf Basis der Sensorsignale des ersten Sensors 23 erzeugten Steuersignale, die unter gewöhnlichen Umständen erst bei höheren Beschleunigungen einen Unfall anzeigen, an die ESP-Steuerung 30 weiter, wenn das auf Basis der Sensorsignale des zweiten Sensors 24 erzeugte Schaltsignal einen Unfall anzeigt.

Optional kann ein zweiter Signalgenerator 28 vorgesehen sein, der ein vom Auftreten eines Unfalls unabhängiges pulsweitenmoduliertes Betriebssignal erzeugt und dem zweiten Signaleingang 26b des Umschalters 26 über die Verbindung 29c zuführt. Dabei wird das Betriebssignal des zweiten Signalgenerators 28 vom zweiten Signaleingang 26b nur dann zum Signalausgang 26d weitergeleitet, wenn das Schaltsignal anzeigt, dass kein Unfall aufgetreten ist. Der zweite Signalgenerator 28 kann dabei über die Verbindung 29b mit dem ersten Signalgenerator 27 im Hauptcontroller 21 gekoppelt sein, so dass das Betriebssignal von dem vom ersten Signalgenerator 27 erzeugten pulsweitenmodulierten Steuersignal getriggert wird. Der optionale zweite Signalgenerator 28 kann aber auch unabhängig vom ersten Signalgenerator 27 ein kontinuierliches Betriebssignal aussenden, mithilfe dessen die korrekte Funktionsweise des Umschalters 26 bzw. der dazugehörigen Zuleitungen überprüft werden kann.

Bei dem erfindungsgemäßen Verfahren werden nun die Sensorsignale der Sensoren 23, 24 in der Auswerteeinheit 25 ausgewertet und in ein Steuersignal umgesetzt und das Steuersignal wird über den Datenbus 31 im Fahrzeug an die ESP-Steuerung 30 übertragen. Das Steuersignal zeigt dabei an, ob ein Unfall aufgetreten ist. Es kann auch dann ein anders ausgebildetes Steuersignal über den Datenbus 31 an die ESP-Steuerung 30 übertragen werden, wenn kein Unfall aufgetreten ist. Erfindungsgemäß wird ein weiteres Steuersignal, das anzeigt, ob ein Unfall aufgetreten ist, über die Direktverbindung 32 an die ESP-Steuerung 30 übertragen. Wenn wenigstens eines der beiden so an die ESP-Steuerung 30 übertragenen Steuersignale einen Unfall anzeigt, wird ein Bremsregelsignal erzeugt, mit dem eine kontrollierte Bremsung, z.B. eine Vollbremsung oder eine Teillastbremsung, initiiert wird.

Falls sowohl der erste Sensor 23 als auch der zweite Sensor 24 einen Unfall anzeigt, werden darüber hinaus die Airbag-Funktionen aktiviert und über den Datenbus 31 im Fahrzeug weitere Vorkehrungen zur Abmilderung eines Unfalls und seiner Folgen getroffen. Es wird mit dem Steuersignal beispielsweise die Benzinpumpe abgeschaltet, um die Brandgefahr durch auslaufenden Treibstoff zu verringern, die Türen entriegelt, um Rettungskräften die Bergung von Verletzten zu erleichtern und ein Signal an eine Notrufeinheit übermittelt, von der ein automatischer Notruf über Funk ausgegeben wird.

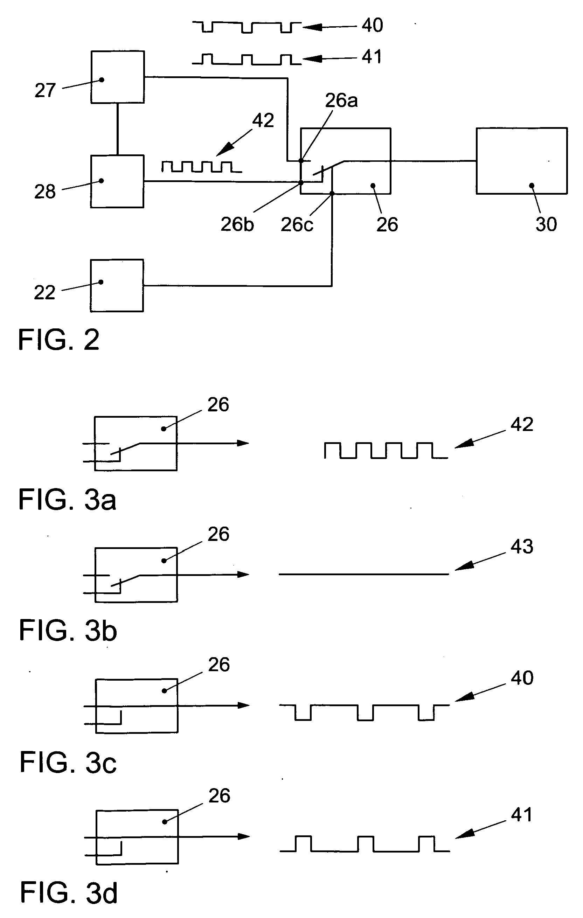

Die Erzeugung und Übertragung des weiteren Steuersignals über die Direktverbindung 32 gemäß einem Ausführungsbeispiel der Erfindung wird nun mit Bezug zu den Figuren 2 bis 4 näher erläutert. Die Verfahrensschritte sowie die dargestellten vorrichtungstechnischen Ausschnitte können z.B. in Zusammenhang mit dem in der Figur 1 beschriebenen Ausführungsbeispiel des erfindungsgemäßen Bremsassistenzsystems 10 eingesetzt werden.

In Figur 2 ist schematisch ein Ausschnitt aus dem Ausführungsbeispiel des erfindungsgemäßen Bremsassistenzsystems 10 aus Figur 1 mit den Steuer- und Betriebssignalen, die dem Umschalter 26 zugeführt werden können, gemäß dem Ausführungsbeispiel des erfindungsgemäßen Verfahrens dargestellt. Die hier beschriebenen Signale sind Pulsweitenmodulations-Signale und werden abgekürzt als PWM-Signale bezeichnet. Der erste Signalgenerator 27 sendet ein PWM-Signal 40 mit einem langen Puls und darauffolgender kurzer Pause aus, wenn der erste Sensor 23 keinen Unfall registriert. Wird ein Unfall erkannt, so wird dieses PWM-Signal 40 in ein PWM-Signal 41 invertiert, d.h. eine lange Pause und ein kurzer Puls folgen aufeinander. In Abhängigkeit von dem Sensorsignal des Sensors 23 wird eines dieser PWM-Signale 40, 41 dem ersten Signaleingang 26a des Umschalters 26 zugeführt. Der zweite Signalgenerator 28 erzeugt ein PWM-Signal 42 mit gleichlangen Puls- und Pausenabschnitten. Dieses PWM-Signal 42 ist ein Betriebssignal und wird dem zweiten Signaleingang 26b des Umschalters 26 zugeführt. Der Nebencontroller 22 kann in Abhängigkeit von den Sensorsignalen des zweiten Sensors 24 ein Schaltsignal an den Umschalter 26 übertragen. Das Schaltsignal schaltet den Umschalter 26 so, dass entweder das Betriebsignal oder das Steuersignal an die ESP-Steuerung 30 weitergeleitet wird.

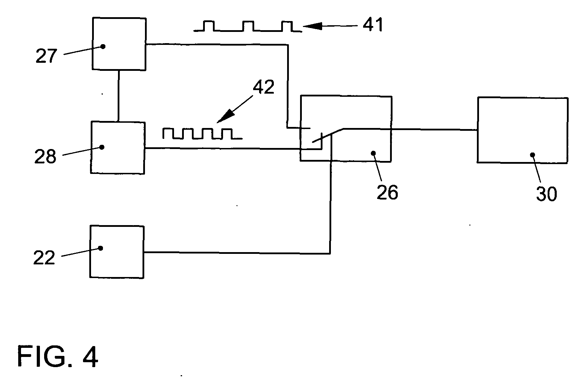

In der Figur 4 ist eine zu der Figur 2 alternative Ausführungsform der Architektur um den Umschalter 26 und die beiden Signalgeneratoren 27, 28 dargestellt. Die Kopplung der beiden Signalgeneratoren 27, 28 kann beispielsweise derart ausgestaltet sein, dass der zweite Signalgenerator 28 nur dann von dem ersten Signalgenerator 27 ausgelöst wird, wenn die Pulse des PWM-Signals 40 in bestimmten Zeitfenstern erfasst werden, und nicht ausgelöst wird, wenn in solchen Zeitfenstern das auslösende PWM-Signal 40 gerade eine Pause aufweist. Es könnte auch von dem zweiten Signalgenerator 28 ein PWM-Signal an den zweiten Signaleingang 26b des Umschalters 26 übertragen werden, das den multiplizierten PWM-Signalen 40 und 42 entspricht. Auf diese Weise könnten Signalstörungen, z.B. Asynchronitäten oder Signalverzerrungen der PWM-Signale frühzeitig in der ESP-Steuerung 30 erkannt und ausgewertet werden.

Dadurch dass die Signalformen der Steuersignale 40, 41 untereinander unterschiedlich sind, je nachdem, ob der erste Sensor 23 einen Unfall anzeigt oder nicht, und auch unterschiedlich zu der Signalform des Betriebssignals 42 sind, kann in der ESP-Steuerung 30 festgestellt werden, welches Signal von der Airbag-Steuerung 20 über die Direktverbindung 32 empfangen wurde. In der Figur 3a ist der Fall dargestellt, bei dem vom zweiten Sensor 24, dem "Safing"-Sensor, kein Unfall erkannt wird und der Umschalter 26 sowie die Direktverbindung 32 einwandfrei funktionieren.

In der Figur 3b ist der Fall dargestellt, bei dem im Umschalter 26, auf der Direktverbindung 32 oder in einem der Signalgeneratoren 27, 28 eine Funktionsstörung vorliegt, so dass in der ESP-Steuerung ein Signal 43 empfangen wird. In diesem Falle kann die ESP-Steuerung 30 über den Datenbus 31 im Fahrzeug eine Fehlermeldung erzeugen, die z.B. auf einer Multifunktionsanzeige durch ein aufleuchtendes Kontrolllämpchen im Fahrzeug den Fahrer auf diesen Fehler aufmerksam macht.

In den Figuren 3c und 3d ist der Fall dargestellt, bei dem der zweite Sensor 24 einen Unfall erkennt. In der Figur 3c ist in der ESP-Steuerung 30 aus der Signalform ersichtlich, dass der erste Sensor 23 noch keinen Unfall erkannt hat und in der Figur 3d, dass beide Sensoren 23, 24 einen Unfall anzeigen, woraufhin ein Bremsregelsignal für eine kontrollierte Vollbremsung ausgelöst wird.

### Bezugszeichenliste

- 10: Bremsassistenzsystem
- 20: Airbag-Steuerung
- 21: Hauptcontroller
- 22: Nebencontroller
- 23: Erster Sensor zur Unfallerkennung
- 24: Zweiter Sensor zur Unfallerkennung
- 25: Auswerteeinheit
- 26: Umschalter
- 26a: erster Signaleingang des Umschalters
- 26b: zweiter Signaleingang des Umschalters
- 26c: Schalteingang des Umschalters
- 26d: Signalausgang des Umschalters
- 27: Erster Signalgenerator
- 28: Zweiter Signalgenerator
- 29a - c: Verbindungen zwischen Hauptcontroller und Umschalter
- 30: ESP-Steuerung
- 31: Datenbus im Fahrzeug
- 32: Direktverbindung zwischen Airbag-Steuerung und ESP-Steuerung
- 33: Bremsen
- 40 - 43: Signalformen

## Patentansprüche

1. Verfahren zum Steuern eines Bremsassistenzsystems (10) eines Fahrzeugs, bei dem:
- Sensorsignale zumindest eines ersten Sensors (23) in zumindest ein Steuersignal umgesetzt und das Steuersignal über eine erste Verbindung (31) an ein Bremsregel-Steuergerät (30) übertragen wird, wobei das Steuersignal anzeigt, ob ein Unfall aufgetreten ist,
- das oder ein weiteres Steuersignal, das anzeigt, ob ein Unfall aufgetreten ist, über eine zweite Verbindung (29a, 32), die physikalisch unabhängig von der ersten Verbindung (31) ist, an das Bremsregel-Steuergerät (30) übertragen wird und
- das Bremsregel-Steuergerät (30) ein Bremsregelsignal in Abhängigkeit von den über die beiden Verbindungen (31; 29a, 32) empfangenen Steuersignalen erzeugt,
**dadurch gekennzeichnet, dass**
- Sensorsignale eines zweiten Sensors (24), der unabhängig von dem ersten Sensor (23) ist, in ein Schaltsignal umgesetzt werden, wobei das Schaltsignal anzeigt, ob ein Unfall aufgetreten ist, und
- das Steuersignal über die zweite Verbindung (29a, 32) dann an das Bremsregel-Steuergerät (30) übertragen wird, wenn das Schaltsignal anzeigt, dass ein Unfall aufgetreten ist.

2. Verfahren nach Anspruch 1,
**dadurch gekennzeichnet,**
**dass** ein vom Auftreten eines Unfalls unabhängiges Betriebssignal erzeugt wird und dass dieses Betriebssignal an das Bremsregel-Steuergerät (30) übertragen wird, wenn das Schaltsignal anzeigt, dass kein Unfall aufgetreten ist.

3. Verfahren nach Anspruch 2,
**dadurch gekennzeichnet,**
**dass** sich das Steuersignal von dem Betriebssignal unterscheidet und dass in dem Bremsregel-Steuergerät (30) mittels eines Unterscheidungsmerkmals des über die zweite Verbindung (29a, 32) empfangenen Signals ein Betriebszustand oder Fehlerzustand ermittelt wird.

4. Verfahren nach einem der vorangegangenen Ansprüche,
**dadurch gekennzeichnet,**
**dass** das Steuersignal und/oder das Betriebssignal pulsmodulierte Signale sind.

5. Verfahren nach einem der Ansprüche 2 bis 4,
**dadurch gekennzeichnet,**
**dass** das Betriebssignal vom Steuersignal getriggert wird.

6. Bremsassistenzsystem (10) für ein Fahrzeug, umfassend
- eine Steuervorrichtung (20) zum Empfangen und Auswerten von Sensorsignalen zumindest eines ersten Sensors (23), wobei von der Steuervorrichtung (20) zumindest ein Steuersignal ausgebbar ist, welches anzeigt, ob ein Unfall aufgetreten ist, und
- ein Bremsregel-Steuergerät (30), das über eine erste Verbindung (31) mit der Steuervorrichtung (20) gekoppelt ist und mit welchem ein von der Steuervorrichtung (20) ausgegebenes Steuersignal empfangbar ist, und
- eine zweite Verbindung (29a, 32), welche die Steuervorrichtung (20) mit dem Bremsregel-Steuergerät (30) koppelt, wobei die zweite Verbindung (29a, 32) physikalisch unabhängig von der ersten Verbindung (31) ist,
- wobei mit dem Bremsregel-Steuergerät (30) das oder ein weiteres von der Steuervorrichtung (20) ausgegebene(s) Steuersignal über die zweite Verbindung (29a, 32) empfangbar ist und ein Bremsregelsignal für die Bremsen (33) des Fahrzeugs in Abhängigkeit von den über die beiden Verbindungen (31; 29a, 32) empfangenen Steuersignalen erzeugbar ist,
**dadurch gekennzeichnet,**
- **dass** das Bremsassistenzsystem (10) in der zweiten Verbindung (29a, 32) einen Umschalter (26) aufweist, der einen ersten Signaleingang (26a), einen Signalausgang (26d) und einen Schalteingang (26c) umfasst,
- **dass** der Umschalter (26) so mit der Steuervorrichtung (20) gekoppelt ist, dass dem ersten Signaleingang (26a) des Umschalters (26) das über die zweite Verbindung (29a) von der Steuervorrichtung (20) ausgegebene Steuersignal zuführbar ist,
- **dass** die Steuervorrichtung (20) zum Empfangen und Auswerten von Sensorsignalen eines zweiten Sensors (24), der unabhängig von dem ersten Sensor (23) ist, ausgebildet ist, wobei von der Steuervorrichtung (20) ein von den Sensorsignalen des zweiten Sensors (24) abhängiges Schaltsignal an den Schalteingang (26c) des Umschalters (26) ausgebbar ist, wobei das Schaltsignal anzeigt, ob ein Unfall aufgetreten ist, und
- **dass** der Umschalter (26) so ausgebildet ist, dass das Steuersignal vom ersten Signaleingang (26a) zum Signalausgang (26d) weitergeleitet wird, wenn das Schaltsignal anzeigt, dass ein Unfall aufgetreten ist.

7. Bremsassistenzsystem nach Anspruch 6,
**dadurch gekennzeichnet,**
**dass** das Bremsassistenzsystem (10) einen Signalgenerator (28) zum Erzeugen eines vom Auftreten eines Unfalls unabhängigen Betriebssignals aufweist, dass der Signalgenerator (28) mit einem zweiten Signaleingang (26b) des Umschalters (26) gekoppelt ist und dass der Umschalter (26) so ausgebildet ist, dass das Betriebssignal des Signalgenerators (28) vom zweiten Signaleingang (26b) zum Signalausgang (26d) weitergeleitet wird, wenn das Schaltsignal anzeigt, dass kein Unfall aufgetreten ist.

8. Bremsassistenzsystem nach einem der Ansprüche 6 oder 7,
**dadurch gekennzeichnet,**
**dass** die Steuervorrichtung (20) ein Airbag-Steuergerät ist.

## Claims

1. Method for controlling a braking assistance system (10) of a vehicle, in which:
- sensor signals for at least a first sensor (23) are converted into at least one control signal, and the control signal is transmitted to a brake closed-loop/open-loop control device (30) via a first connection (31), wherein the control signal indicates whether an accident has occurred,
- the control signal or a further control signal which indicates whether an accident has occurred is transmitted to the brake closed-loop/open-loop control device (30) via a second connection (29a, 32) which is physically independent of the first connection (31), and
- the brake closed-loop/open-loop control device (30) generates a brake closed-loop control signal as a function of the control signals received via the two connections (31; 29a, 32),
**characterized in that**
- sensor signals of a second sensor (24) which is independent of the first sensor (23) are converted into a switching signal, wherein the switching signal indicates whether an accident has occurred, and
- the control signal is transmitted to the brake closed-loop/open-loop control device (30) via the second connection (29a, 32) when the switching signal indicates that an accident has occurred.

2. Method according to Claim 1,
**characterized**
**in that** an operating signal which is independent of the occurrence of an accident is generated, and in that this operating signal is transmitted to the brake closed-loop/open-loop control device (30) if the switching signal indicates that an accident has not occurred.

3. Method according to Claim 2,
**characterized**
**in that** the control signal differs from the operating signal, and in that an operating state or fault state is determined in the brake closed-loop/open-loop control device (30) by means of a differentiating feature of the signal which is received via the second connection (29a, 32).

4. Method according to one of the preceding claims,
**characterized**
**in that** the control signal and/or the operating signal are pulse-width-modulated signals.

5. Method according to one of Claims 2 to 4,
**characterized**
**in that** the operating signal is triggered by the control signal.

6. Braking assistance system (10) for a vehicle, comprising
- a control device (20) for receiving and evaluating the sensor signals of at least a first sensor (23), wherein the control device (20) can output at least one control signal which indicates whether an accident has occurred, and
- a brake closed-loop/open-loop control device (30) which is coupled to the control device (20) via a first connection (31) and with which a control signal which is output by the control device (20) can be received, and
- a second connection (29a, 32) which couples the control device (20) to the brake closed-loop/open-loop control device (30), wherein the second connection (29a, 32) is physically independent of the first connection (31),
- wherein the or a further control signal which is output by the control device (20) can be received with the brake closed-loop/open-loop control device (30) via the second connection (29a, 32), and a brake closed-loop control signal for the brakes (33) of the vehicle can be generated as a function of the control signals which are received by the two connections (31; 29a, 32),
**characterized**
- **in that** the brake assistance system (10) has, in the second connection (29a, 32), a changeover switch (26) which comprises a first signal input (26a), a signal output (26d) and a switching input (26c),
- **in that** the changeover switch (26) is coupled to the control device (20) in such a way that the control signal which is output by the control device (20) via the second connection (29a) can be fed to the first signal input (26a) of the changeover switch (26),
- **in that** the control device (20) is designed to receive and evaluate sensor signals of a second sensor (24) which is independent of the first sensor (23), wherein the control device (20) can output a switching signal, dependent on the sensor signals of the second sensor (24), to the switching input (26c) of the changeover switch (26), wherein the switching signal indicates whether an accident has occurred, and
- **in that** the changeover switch (26) is embodied in such a way that the control signal is passed on from the first signal input (26a) to the signal output (26d) if the switching signal indicates that an accident has occurred.

7. Braking assistance system according to Claim 6,
**characterized**
**in that** the braking assistance system (10) has a signal generator (28) for generating an operating signal which is independent of the occurrence of an accident, in that the signal generator (28) is coupled to a second signal input (26b) of the changeover switch (26), and in that the changeover switch (26) is embodied in such a way that the operating signal of the signal generator (28) is passed on from the second signal input (26b) to the signal output (26d) if the switching signal indicates that an accident has not occurred.

8. Braking assistance system according to either Claim 6 or 7,
**characterized**
**in that** the control device (20) is an airbag control device.

## Revendications

1. Procédé de commande d'un système (10) d'assistance au freinage d'un véhicule, dans lequel :
des signaux d'au moins un premier capteur (23) sont convertis en au moins un signal de commande, le signal de commande étant transmis par une première liaison (31) à un appareil (30) de commande de régulation de freinage, le signal de commande indiquant si un accident est survenu,
le signal de commande ou un autre signal de commande qui indique si un accident est survenu est transmis par une deuxième liaison (29a, 32) qui est physiquement indépendante de la première liaison (31) à l'appareil (30) de commande de régulation de freinage et
l'appareil (30) de commande de régulation de freinage forme un signal de régulation de freinage en fonction des signaux de commande reçus par l'intermédiaire des deux liaisons (31; 29a, 32), **caractérisé en ce que**
les signaux d'un deuxième capteur (24) indépendant du premier capteur (23) sont convertis en un signal de commutation, le signal de commutation indiquant si un accident est survenu et
**en ce que** le signal de commande est alors transmis par la deuxième liaison (29a, 32) à l'appareil (30) de commande de régulation de freinage si le signal de commutation indique qu'un accident est survenu.

2. Procédé selon la revendication 1, **caractérisé en ce qu'**un signal de service indépendant de la survenance d'un accident est formé et **en ce que** ce signal de service est transmis à l'appareil (30) de commande de régulation de freinage si le signal de commutation indique qu'aucun accident n'est survenu.

3. Procédé selon la revendication 2, **caractérisé en ce que** le signal de commande se distingue du signal de service et **en ce qu'**un état de fonctionnement ou un état d'erreur est déterminé dans l'appareil (30) de commande de régulation de freinage au moyen d'une caractéristique distinctive du signal reçu par l'intermédiaire de la deuxième liaison (29a, 32).

4. Procédé selon l'une des revendications précédentes, **caractérisé en ce que** le signal de commande et/ou le signal de service sont des signaux pulsés modulés.

5. Procédé selon l'une des revendications 2 à 4, **caractérisé en ce que** le signal de service est activé par le signal de commande.

6. Système (10) d'assistance au freinage d'un véhicule, comprenant
un ensemble de commande (20) qui reçoit et évalue des signaux d'au moins un premier capteur (23), au moins un signal de commande qui indique si un accident est survenu pouvant être délivré par l'ensemble de commande (20),
un appareil (30) de commande de régulation de freinage raccordé à l'ensemble de commande (20) par une première liaison (31) et par lequel un signal de commande délivré par l'ensemble de commande (20) peut être reçu et
une deuxième liaison (29a, 32) qui raccorde l'ensemble de commande (20) et l'appareil (30) de commande de régulation de freinage, la deuxième liaison (29a, 32) étant physiquement indépendante de la première liaison (31),
le signal de commande ou un autre signal de commande délivré par l'ensemble de commande (20) pouvant être reçu par l'appareil (30) de commande de régulation de freinage par l'intermédiaire de la deuxième liaison (29a, 32) et un signal de régulation de freinage pouvant être formé pour les freins (33) du véhicule en fonction des signaux de commande reçus par l'intermédiaire des deux liaisons (31; 29a, 32), **caractérisé en ce que**
le système (10) d'assistance au freinage présente dans la deuxième liaison (29a, 32) un convertisseur (26) qui comporte une première entrée (26a) de signaux, une sortie (26d) de signaux et une entrée de commutation (26c),
**en ce que** le convertisseur (26) est raccordé à l'ensemble de commande (20) de telle sorte que le signal de commande délivré par l'ensemble de commande (20) par l'intermédiaire de la deuxième liaison (29a) puisse être amené à la première entrée (26a) de signaux du convertisseur (26),
**en ce que** l'ensemble de commande (20) est configuré pour recevoir et évaluer des signaux d'un deuxième capteur (24) indépendant du premier capteur (23), un signal de commutation dépendant des signaux du deuxième capteur (24) pouvant être délivré par l'ensemble de commande (20) sur l'entrée de commande commutation (26c) du convertisseur (26), le signal de commutation indiquant si un accident est survenu et
**en ce que** le convertisseur (26) est configuré de telle sorte que le signal de commande est transmis de la première entrée (26a) de signaux à la sortie (26d) de signaux si le signal de commutation indique qu'un accident est survenu.

7. Système d'assistance au freinage selon la revendication 6, **caractérisé en ce que** le système (10) d'assistance au freinage présente un générateur (28) de signaux qui forme un signal de service indépendant de la survenance d'un accident, **en ce que** le générateur (28) de signaux est raccordé à une deuxième entrée (26b) de signaux du convertisseur (26) et **en ce que** le convertisseur (26) est configuré de telle sorte que le signal de service du générateur (28) de signaux est transmis de la deuxième entrée (26b) de signaux à la sortie (26d) de signaux si le signal de commutation indique qu'aucun accident n'est survenu.

8. Système d'assistance au freinage selon l'une des revendications 6 ou 7, **caractérisé en ce que** l'ensemble de commande (20) est un appareil de commande de coussin gonflable de sécurité.
